(19) Europäisches Patentamt
European Patent Office
Office européen des brevets

(11) EP 4 011 891 A1

(12) EUROPÄISCHE PATENTANMELDUNG

(43) Veröffentlichungstag:
**15.06.2022 Patentblatt 2022/24**

(21) Anmeldenummer: **20212716.3**

(22) Anmeldetag: **09.12.2020**

(51) Internationale Patentklassifikation (IPC):
***C07F 9/6571** (2006.01)* ***C07F 9/38** (2006.01)*
***C09K 21/12** (2006.01)*

(52) Gemeinsame Patentklassifikation (CPC):
**C07F 9/3808; C07F 9/657181; C07F 9/65719; C09K 21/12**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **ALBACH, Rolf**
  **51061 Köln (DE)**
- **PAVEN, Maxime**
  **40764 Mainz (DE)**
- **POSPIECH, Doris**
  **01069 Dresden (DE)**
- **LENZ, Johannes**
  **01069 Dresden (DE)**
- **VOIT, Brigitte**
  **01069 Dresden (DE)**
- **MENTIZI, Stamo**
  **50968 Köln (DE)**
- **LANGSTEIN, Gerhard**
  **51515 Kürten (DE)**

(74) Vertreter: **Levpat**
**c/o Covestro AG**
**Gebäude 4825**
**51365 Leverkusen (DE)**

(54) **VERFAHREN ZUR HERSTELLUNG VON FLAMMGESCHÜTZTEN PUR/PIR-HARTSCHAUMSTOFFEN**

(57) Die vorliegende Erfindung betrifft neuartige hydroxyfunktionelle Phosphonate, ihre Herstellung und ihren Einsatz als Flammschutzmittel in Polymeren, insbesondere in Polyurethan-Polymeren (PUR) bzw. Polyurethan/Polyisocyanurat-Polymeren (PUR/PIR).

EP 4 011 891 A1

## Beschreibung

Die vorliegende Erfindung betrifft neuartige hydroxyfunktionelle Phosphonate, ihre Herstellung und ihren Einsatz als Flammschutzmittel in Polymeren, insbesondere in Polyurethan-Polymeren (PUR) bzw. Polyurethan/Polyisocyanurat-Polymeren (PUR/PIR).

Steigende Anforderungen an Polymere, beispielsweise an die Effizienz von Isolationsmaterialien in Bezug auf die Wärmedämmung, an die Sicherheit, die Kosten und die Nachhaltigkeit von Dämmstoffen im Bauwesen, erfordern die kontinuierliche Verbesserung von Flammschutzmitteln. Z.B. wurden in effizient wärmedämmenden Polyurethan/Polyisocyanurat- (PUR/PIR)-Schaumstoffen Phosphonate wie DMMP und DEEP zur Verringerung des Brandrisikos eingesetzt. Diese wurden aber aufgrund ihrer Flüchtigkeit, Toxizität und Dual-use-Fähigkeit immer mehr verdrängt. Neue hydroxyfunktionelle Phosphonate wie Diethylhydroxymethylphosphonat und Dibutylhydroxymethylphosphonat wurden in den letzten Jahren zur Marktreife entwickelt, dort hat sich neben Phosphatestern wie Tris(chlorpropyl)phosphat, Triethylphosphat, und Triarylphosphaten auch 9,10-Dihydro-9-oxa-10-phosphaphenanthren-10-oxid ("DOPO") als besonders wirksames Flammschutzmittel etabliert. Es ist die herrschende Meinung, dass Verbindungen des Phosphors umso effizienter die Reaktionen in einer Flamme stören, je niedriger die formale Oxidationsstufe des Phosphors und je höher der Dampfdruck der Verbindung liegt. Aufgrund von Aspekten der Emissionen aus Schaumstoffen während der Gebrauchsphase ist ein hoher Dampfdruck jedoch kritisch zu sehen.

Hydroxy-funktionelle Flammschutzmittel wie die oben erwähnten Phosphonate und DOPO haben den Vorteil, dass sie mit Isocyanat reagieren können und so während der Gebrauchsphase in die Polymermatrix eingebunden sind. Dabei gelten halogenfreie Derivate des DOPO (formale Oxidationsstufe des Phosphors +I) als besonders effiziente aber, aufgrund der Synthese des notwendigen 2-Phenylphenols, wenig kostengünstige Referenz. Es ist also weiterhin notwendig, nach halogenfreien Verbindungen zu suchen, die sich durch einfache Herstellung, Einbaubarkeit in die Polymermatrix, gut zugängliche Rohstoffe (in einer bevorzugten Ausführungsform auch aus nachwachsenden Quellen) und ausgezeichnete Wirksamkeit auszeichnen.

Es ist herrschende Meinung, dass neben der mit dem Molgewicht einhergehenden Flüchtigkeit die Zahl der an Phosphor gebundenen Sauerstoffe in einer phosphorhaltigen Substanz Einfluss auf die Wirkung als Flammschutzmittel hat. Verbindungen mit vier an den Phosphor gebundenen Sauerstoffen gelten aufgrund des besonders niedrigen pKa der korrespondieren Säure als vorteilhaft bei der Bildung einer das Material schützenden Kohleschicht. Verbindungen mit ein- oder zwei Sauerstoff pro Phosphor, wie DOPO, gelten als besonders geeignet, die Radikalreaktionen in einer Flamme zu unterbrechen, so wie das auch von Chlor und Brom bekannt ist. Verbindungen mit drei an Phosphor gebundenen gelten als Zwischenlösung.

Die basenkatalysierte Alkylierung von Phosphonsäuren mit Aldehyden ist bekannt. US 3,385,801 und WO 2010/080425 offenbaren die Herstellung von Dialkyl-$\alpha$-hydroxyalkylphosphonaten und deren Verwendung als Flammschutzmittel. Es werden keine Angaben zu einem Einfluss der Dialkyl-$\alpha$-hydroxyalkylphosphonate auf die mechanischen Eigenschaften, speziell die Elastizität und die Zähigkeit bei Zugbelastung von Polyurethan-Schaumstoffen gegeben. WO 2020/201187 beschreibt Dibutyl-$\alpha$-hydroxyalkylphosphonat als vorteilhaft bei den plastifizierenden Eigenschaften, ist aber noch nicht optimal in der Wirkung als Flammschutzmittel.

Gegenstand der Erfindung sind neuartige hydroxyfunktionelle zyklische Phosphonate und ihr Einsatz in der flammwidrigen Ausrüstung von Kunststoffen, insbesondere in isocyanat--basierten und insbesondere in isocyanurat-modifizierten Polymeren (hier einzeln oder gemeinsam mit "PUR/PIR" bezeichnet), z.B. in PUR/PIR-Schaumstoffen - aber auch in thermoplastischen Polyurethanen (TPU).

Die erfindungsgemäßen Phosphonate leiten sich ab von (gegebenenfalls substituierten) 2,2'-Biphenylen oder Binaphtholen, die leicht durch chemische oder enzymatische Kupplung der entsprechenden Phenole und Naphthole herstellbar sind. Die Herstellung entsprechender Phosphonsäuren ist bekannt (WO 2016/026871, EP 285136). Als Flammschutzmittel einsetzbare hydroxyfunktionelle Phosphonate auf dieser Basis sind bisher nicht bekannt. Diese müssen sich vor allem durch einen hohen Gehalt an Phosphor und einen geringen eigenen Beitrag zur Verbrennungsenthalpie auszeichnen. Der Zusammenhang zwischen Verbrennungsenthalpie und Sauerstoffverbrauch liegt den Messungen im Cone Calorimeter nach ISO 5660-1 zugrunde und wird auch hier angewandt.

Die als Flammschutzmittel geeigneten erfindungsgemäßen hydroxyfunktionellen Phosphonate PH sind solche der Formeln

(I) $(R^1O)(R^2O)P(O)CH(OH)\text{-}R^3$

und/oder

(II) $(R^1O)(R^2O)P(O)CH(OH)\text{-}R^4\text{-}CH(OH)\text{-}P(O)(OR^5)(OR^6)$,

wobei es sich bei

- $R^1$, $R^2$, $R^5$, $R^6$ um substituierte Kohlenwasserstoffreste handelt, die gleich oder verschieden sein können, und die so ausgewählt sind, dass das Verhältnis der Summe der Wasserstoffe in $R^1$ und $R^2$ zu der Summe der Kohlenstoffe in $R^1$ und $R^2$ (H[$R^1$+$R^2$] /C[$R^1$+$R^2$] -Verhältnis) $\leq 2$, bevorzugt $\leq 1{,}2$ besonders bevorzugt $\leq 1$ beträgt, und dass das Verhältnis der Summe der Wasserstoffe in $R^5$ und $R^6$ zu der Summe der Kohlenstoffe in $R^5$ und $R^6$ (H[$R^5$+$R^6$] /C[$R^5$+$R^6$] -Verhältnis) $\leq 2$, bevorzugt $\leq 1{,}2$ besonders bevorzugt $\leq 1$ beträgt,

- $R^1O$, $R^2O$ sowie P bzw. $R^5O$, $R^6O$ und P jeweils $\geq$**7-gliedrige Ringe** bilden, und

- $R^3$ ausgewählt ist aus der Gruppe bestehend aus substituierten Alkyl, Alkenyl-, Polyoxyalkenyl-, Aryl- und Aralkylresten, wobei die Summe der Wasserstoffe in $R^3$ (H[$R^3$]) $\leq 10$, bevorzugt $\leq 5$, beträgt.

- $R^4$ ausgewählt ist aus der Gruppe bestehend aus substituierten Alkyl-, Alkenyl-, Polyoxyalkenyl-, Aryl- und Aralkylresten, wobei die Summe der Wasserstoffe in $R^3$ (H[$R^3$]) $\leq 20$, bevorzugt $\leq 5$, beträgt.

Bevorzugt handelt es sich bei die den erfindungsgemäßen Phosphonaten **PH** um solche, bei denen $R^1O$, $R^2O$ sowie P einen 7-gliedrigen Ring bilden und/oder $R^5O$, $R^6O$ und P einen 7-gliedrigen Ring bilden.

$R^1$, $R^2$, $R^5$ und $R^6$ sind jeweils bevorzugt substituiert mit Substituenten ausgewählt aus Wasserstoff, Fluor, Chlor, Brom, $OR^7$ (mit $R^7$ = H, C1-C2-Alkyl, Alkylen oder Polyoxyalkylen), $NR^8R^9$ (mit $R^8$ = H, C1-C2-Alkyl, Alkylen oder Polyoxyalkylen); $R^9$ = H, NH, OH, C1-C2-Alkyl oder Polyoxyalkylen) und $SO_nR^{10}$ [mit $R^{10}$ = H, Alkali- und Erdalkalimetallkationen (n = 0-3)]. Die Substituenten and $R^1$, $R^2$, $R^5$ und $R^6$ können gleich oder verschieden sein.

Bei $R^3$ handelt es sich insbesondere um einen Arylrest, ganz besonders bevorzugt um einen Arylrest ausgewählt aus der Gruppe enthaltend

a. $C_6H_5$ und dessen substituierte Derivate, sowie
b. $C_nH_{n-1}X_{5-n}$ mit X = O, $NR^7$, S und n = 2-5 und dessen substituierte Derivate.

Bei $R^4$ handelt es sich insbesondere um Substituenten ausgewählt aus der Gruppe enthaltend

a. $C_6H_4$, $C_{10}H_6$, und deren substituierte Derivate, wobei ein Teil der Kohlenstoffatome im Ring auch durch Stickstoff ersetzt sein können, und
b. $C_nH_{n-2}X_{5-n}$ mit X = O, $NR^7$, S und n = 2-5 sowie deren substituierte Derivate.

Die erfindungsgemäßen Phosphonate **PH** lassen sich beispielsweise durch Umsetzung eines entsprechenden Aldehyds oder eines Dialdehyds mit der entsprechenden Phosphonsäure herstellen. Diese Umsetzung ist allgemein in der Literatur unter dem Namen Pudovic - Reaktion bekannt.

Die in der Literatur beschriebenen Phosphonate (siehe z.B. Chem. Eur. J. 2011, 17, 2120 - 2129) sind allerdings nicht bifunktionell und / oder enthalten einen hohen Anteil Kohlenstoff und Wasserstoff bezogen auf Phosphor, was deren Einsatz als Flammschutzmittel erschwert.

Durch Auswahl bestimmter Phosphonsäuren und bestimmter Aldehydverbindungen als Ausgangsprodukte für die Pudovic - Reaktion gelingt es nun, als Flammschutz geeignete hydroxyfunktionelle Phosphonate **PH** für Polyurethane herzustellen. Bei der Aldehydverbindung handelt es insbesondere um ein (ggf. substituiertes) Terephthalaldehyd- oder Naphthaldehyd, um (ggf. substituiertes) Furfural, Thiofurfural oder Pyrrolcarboxaldehyd. Bei den Phosphonsäuren handelt es sich insbesondere um (gegebenenfalls substituiertes) Dibenzo[d,f][1,3,2]dioxaphosphepin-6-oxid (BPPO). Bei geeigneter Auswahl der Ausgangsstoffe (Furfural) ist es so möglich, ein hydroxyfunktionelles Phosphonat herzustellen, welches zu einem hohen Anteil auf nachwachsenden Rohstoffen basiert.

Aus der Umsetzung von Terephthalaldehyd mit BPPO ergibt sich beispielsweise die Verbindung BBPO-TA, welche besonders vorteilhaft als Flammschutzmittel in isocyanatbasierten-Polymeren, insbesondere solchen mit Isocyanuratstrukturen, eingesetzt werden kann:

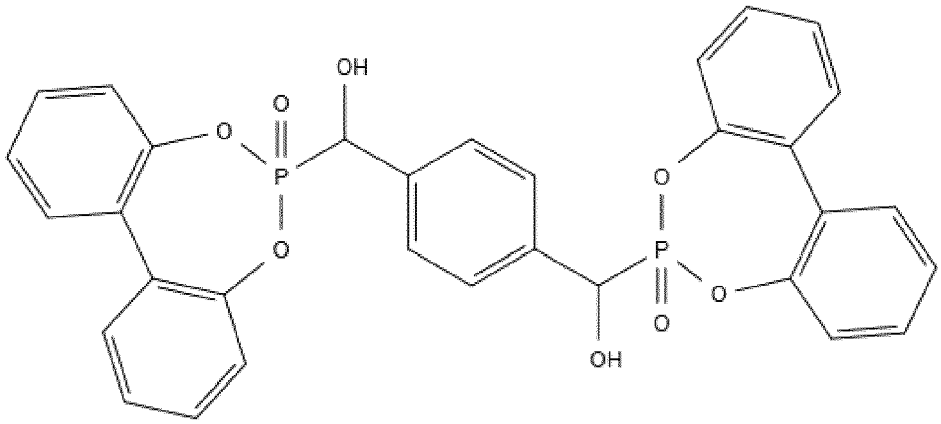

**BBPO-TA**

In einer bevorzugten Ausführungsform des Verfahrens werden die Ausgangsprodukte so gewählt, dass die berechnete stöchiometrische Umsetzung mit Sauerstoff zu $CO_2$, $H_2O$ und $P_2O_5$ und ggf. $SO_2$/$NO_2$ und Halogenwasserstoff weniger als 2,25 kg $O_2$/kg Phosphonat, bevorzugt weniger als 2,1 kg/kg besonders bevorzugt <2 kg/kg benötigt.

Die erfindungsgemäßen Phosphonate lassen sich in bevorzugter Weise zur Herstellung von flammgeschützten Kunststoffen, insbesondere von PUR/PIR-Polymeren verwenden, welche mit einem halogenfreien Flammschutz ausgerüstet sind und gleichzeitig gute mechanische Eigenschaften aufweisen. Die mit den erfindungsgemäßen Phosphonaten ausgerüsteten PUR/PIR-Polymere, insbesondere PUR/PIR-Hartschaumstoffe und thermoplastische Polyurethane, sind ebenfalls Gegenstand dieser Erfindung.

Erfindungsgemäße PUR/PIR-Hartschaumstoffe können hergestellt werden durch die Umsetzung eines Reaktionsgemisches enthaltend

**A1** eine Isocyanat-reaktive Komponente

**A2** Treibmittel

**A3** Katalysator

**A4** gegebenenfalls Additiv

**A5** Flammschutzmittel
mit

**B** einer Isocyanatkomponente,

wobei die Herstellung bei einer Kennzahl von 80 bis 600 erfolgt,
und dadurch gekennzeichnet, dass das Flammschutzmittel A5 ein erfindungsgemäßes PH Phosphonat enthält.

Überraschenderweise wurde gefunden, dass die erfindungsgemäßen PUR/PIR-Hartschaumstoffe enthaltend eine Komponente **PH** einen guten Flammschutz trotz niedriger Phosphorgehalte aufweisen. In einer besonderen Ausführungsform werden ebenfalls die kinetischen Eigenschaften der erfindungsgemäßen Formulierungen zur Herstellung von PUR/PIR-Hartschaumstoffe verbessert. In einer weiteren besonderen Ausführungsform werden ebenfalls die mechanischen Eigenschaften, wie Zugfestigkeit, Bruchdehnung, Zähigkeit und Offenzelligkeit der PUR/PIR-Hartschaumstoffe verbessert.

Als Isocyanat-reaktive Komponente **A1** wird mindestens eine Verbindung ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt. Bevorzugt sind Polyesterpolyole und/oder Polyetherpolyole. Die Isocyanat-reaktive Komponente **A1** kann bevorzugt eine Hydroxylzahl zwischen 25 bis 800 mg KOH/g, insbesondere 50 bis 500 mg KOH/g, besonders bevorzugt 100 bis 400 mg KOH/g und ganz besonders bevorzugt 100 bis 300 mg KOH/g aufweisen. Vorzugsweise weist die einzelne Polyolkomponente ein zahlenmittleres Molekulargewicht von 120 g/mol bis 6000 g/mol, insbesondere 400 g/mol bis 2000 g/mol und besonders bevorzugt 400 g/mol bis 700 g/mol auf.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen Gewichtsanteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Das Äquivalentgewicht gibt das Verhältnis der zahlenmittleren Molekularmasse und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid. Terephthalsäure und/oder Isophthalsäure.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, Furandicarbonsäuren, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat oder Polyethylenterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Propiolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Cyclohexandimethanol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungskatalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren für Polyester- und Polyetherpolyole sind allgemein bekannt, unter anderem ist es auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2 910 585 A1, [0024] - [0041], beschrieben. Beispiele zu Polycarbonatpolyolen und ihre Herstellung finden sich unter anderem in der EP 1 359 177

A1. Die Herstellung geeigneter Polyetheresterpolyole ist unter anderem in der WO 2010/043624 A und in der EP 1 923 417 A beschrieben.

Weiterhin können in der Isocyanat-reaktiven Komponente **A1** niedermolekulare Isocyanat-reaktive Verbindungen enthalten sein, vorzugsweise können di- oder trifunktionelle Amine und Alkohole, bevorzugt Diole und/oder Triole mit Molmassen $M_n$ kleiner als 400 g/mol, insbesondere von 60 bis 300 g/mol, zum Einsatz kommen, z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente **A1,** zum Einsatz.

Neben den oben beschriebenen Polyolen und Isocyanat-reaktiven Verbindungen können in der Komponente **A1** weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Die Komponente **A1** kann aus einer oder mehreren der oben genannten Isocyanat-reaktiven Komponenten bestehen.

Als Treibmittel **A2** kann physikalisches Treibmittel eingesetzt werden, wie beispielsweise niedrig siedende organische Verbindungen, wie z.B. Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und halogenierte Kohlenwasserstoffe, wie z. B. Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel **A2** kann auch chemisches Treibmittel, wie beispielsweise Wasser, Carbonsäure, Carbaminsäure und deren Gemische und Salze, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure, Malonsäure und Rizinolsäure, eingesetzt. Als chemisches Treibmittel wird besonders bevorzugt Wasser eingesetzt.

Vorzugsweise werden keine halogenierten Kohlenwasserstoffe als Treibmittel verwendet.

Als Treibmittel **A2** wird mindestens eine Verbindung, ausgewählt aus der Gruppe bestehend aus physikalischem und chemischem Treibmittel, eingesetzt. Bevorzugt wird nur physikalisches Treibmittel eingesetzt. In einer bevorzugten Ausführungsform weisen die eingesetzten Treibmittel **A2** ein mittleres global warming potential (GWP) von < 120, bevorzugt ein GWP von < 20 auf.

Als Katalysator **A3** zur Herstellung der PUR/PIR-Hartschaumstoffe werden Verbindungen verwendet, welche die Reaktion der reaktiven Wasserstoffatome, insbesondere Hydroxylgruppen enthaltenden Verbindungen mit der Isocyanatkomponente **B** beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente **A1** vorgelegt werden.

Verwendet werden beispielsweise tertiäre Amine und Aminoxide, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin und deren Oxide.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator **A3** kommen ferner in Betracht: Amidine, wie z. B. 2,3-Dimethyl-3,4,5,6-tetrahydropyrimidin, Tetraalkylammoniumhydroxide, wie z. B. Tetramethylammoniumhydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PUR/PIR-Schaumstoffen.

Die oben genannten Katalysatoren können allein oder in Kombination miteinander eingesetzt werden.

Gegebenenfalls können ein oder mehrere Additive als Komponente **A4** eingesetzt werden. Beispiele für die Komponente **A4** sind oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Rizinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrysotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Zur Herstellung der PUR/PIR-Hartschaumstoffe wird ein Flammschutzmittel **A5** eingesetzt, wobei das Flammschutzmittel **A5** erfindungsgemäß als Komponente **PH** ein oder mehrere hydroxyfunktionellen Phosphonate der Formeln (I) und/oder (II) enthält.

Zusätzlich zur Komponente **PH** kann das Flammschutzmittel **A5** weitere Flammschutzmittel wie beispielsweise Phosphate, wie z. B. Triethylphosphat (TEP), Triphenylphosphat (TPP), Trikresylphosphat, Diphenylkresylphosphat (DPK), tert-Butylphenyldiphenylphosphat, Resorcinyldiphenylphosphat (auch als Oligomer) und Bisphenol-A-bis(diphenylphosphat) (auch als Oligomer). Phosphonate wie Diethylethylphosphonat (DEEP), Dimethylpropylphosphonat (DMPP), Diethanolaminomethylphosphonsäurediethylester, Veriquel® R100 bzw. "E06-16" von der Fa. ICL, und auch gemischte Phosphonate wie Ethylbutylhydroxymethylphosphonat sowie Phosphinate wie 9,10-Dihydro-9-oxa-10-phosphorylphenanthrene-10-oxid (DOPO), Salze der Diphenylphosphinigen Säure und Salze der Diethylphosphinigen Säure $Et_2PO_2H$ (Exolit® OP 1235, Exolit® OP 930, Exolit® OP 935, Exolit® OP L 1030) eingesetzt werden. Weitere geeignete Flammschutzmittel **A5** sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat, sowie handelsübliche halogenhaltige Flammschutzpolyole. Bevorzugt sind Diphenylkresylphosphat, Triethylphosphat und Bisphenol-A-bis(diphenylphosphat). Es ist besonders bevorzugt, dass kein halogenhaltiges Flammschutzmittel eingesetzt wird.

Der Anteil der Komponente **PH** am Flammschutzmittel **A5** beträgt vorzugsweise 30,0 Gew.-% bis 100,0 Gew.-%, bevorzugt 50,0 bis 100,0 Gew.-%, insbesondere 70,0 bis 100,0 Gew.-%, jeweils bezogen auf die Gesamtmasse des Flammschutzmittels **A5.**

Die Kombination der Komponente **PH** mit einer niedrigviskosen Phosphorverbindung **PL** ("niedrigviskos" bedeutet in diesem Fall eine Viskosität von < 0,25 Pa*s bei 25°C aufweisend), ganz besonders bevorzugt im Gewichtsverhältnis **PH:PL** von 3:1-5:1 ist vorteilhaft. Bei der Verbindung **PL** handelt es sich bevorzugt um Triethylphosphat und / oder ein von **PH** verschiedenes Phosphonat, z.B. ein Diethyl(hydroxymethyl)phosphonat.

Der Anteil an Komponente **PH** im Reaktionsgemisch beträgt vorzugsweise 0,1 Gew.-% bis 30,0 Gew.-%, bevorzugt 5,0 Gew.-% bis 25,0 Gew.-%, insbesondere 10,0 bis 25,0 Gew.-%, jeweils bezogen auf die Gesamtmasse der Komponente **A1** = 100 Gew.-%.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1-bis C6-Alkylgruppen. Bevorzugt wird die Isocyanatkomponente B ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A1** beschriebenen Polyolen.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Erfindungsgemäß beträgt die Kennzahl (Index) im Reaktionsgemisch 80 bis 600, vorzugsweise 100 bis 500, bevorzugt 200 bis 400. Diese Kennzahl liegt besonders bevorzugt in einem Bereich von 240 bis 400 in dem ein hoher Anteil an Polyisocyanuraten (PIR) vorliegt (der Schaumstoff wird auch als PIR-(Hart)Schaumstoff oder PUR/PIR-Hartschaumstoff bezeichnet) und zu einer höheren Flammwidrigkeit des PUR/PIR-Hartschaumstoffs selbst führt. Ein anderer besonders bevorzugter Bereich für die Isocyanat-Kennzahl ist der Wertebereich von 90 bis 150, insbesondere von 110 bis 150 (der Schaumstoff wird auch als Polyurethan(hart)schaumstoff (PUR-(Hart)Schaumstoff) bezeichnet), in dem der PUR/PIR-Hartschaumstoff zum Beispiel zu geringerer Sprödigkeit neigt.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25°C.

Die Erfindung betrifft ebenfalls einen PUR/PIR-Hartschaumstoff der durch das erfindungsgemäße Verfahren hergestellt ist.

Die Herstellung der erfindungsgemäßen PUR/PIR-Hartschaumstoffe erfolgt bevorzugt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden. Beispiele sind in US-A 2 764 565, in G.Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die erfindungsgemäßen PUR/PIR-Hartschaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Ein weiterer Gegenstand der Erfindung ist demzufolge die Verwendung eines erfindungsgemäßen PUR/PIR-Hartschaumstoffes als Isolationsschaumstoff und/oder als Haftvermittler in Verbundelementen, wobei die Verbundelemente eine einen erfindungsgemäßen PUR/PIR-Hartschaumstoff umfassende Schicht und mindestens eine Deckschicht umfassen. Die Deckschicht wird hierbei zumindest teilweise von einer den erfindungsgemäßen PUR/PIR-Hartschaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln.

Die Erfindung betrifft Verfahren zur Herstellung von PUR/PIR-Polymeren enthaltend Flammschutzmittel umfassend erfindungsgemäße hydroxyfunktionelle Phosphonate **PH.**

In einer ersten bevorzugten Ausführungsform betrifft das Verfahren die Herstellung von PUR/PIR-Hartschaumstoffen durch die Umsetzung eines Reaktionsgemisches enthaltend

**A1** eine Isocyanat-reaktive Komponente

**A2** Treibmittel

**A3** Katalysator

**A4** gegebenenfalls Additiv

**A5** Flammschutzmittel
mit

**B** einer Isocyanatkomponente,

wobei die Herstellung bei einer Kennzahl von 80 bis 600 erfolgt,
und die dadurch gekennzeichnet ist, dass das Flammschutzmittel A5 ein oder mehrere Phosphonate **PH** der Formeln (I) und/oder (II) enthält.

In einer zweiten Ausführungsform betrifft die Erfindung ein Verfahren gemäß der ersten Ausführungsform, dadurch gekennzeichnet, dass in der Isocyanat-reaktiven Komponente **A1** ein Polyesterpolyol enthalten ist.

In einer dritten Ausführungsform betrifft die Erfindung ein Verfahren gemäß der zweiten Ausführungsform, dadurch gekennzeichnet, dass das Polyesterpolyol eine OH-Zahl im Bereich von 100 bis 400 mg KOH/g aufweist.

In einer vierten Ausführungsform betrifft die Erfindung ein Verfahren gemäß einer der obigen Ausführungsformen 1 bis 3, dadurch gekennzeichnet, dass das Treibmittel **A2** ausgewählt ist aus einer oder mehreren Verbindungen der Gruppe bestehend aus halogenfreien chemischen Treibmitteln, halogenfreien physikalischen Treibmitteln und (hydro)fluorierten Olefinen.

In einer fünften Ausführungsform betrifft die Erfindung ein Verfahren gemäß einer der Ausführungsformen 1 bis 4, dadurch gekennzeichnet, dass das Flammschutzmittel **A5** 30,0 Gew.-% bis 100,0 Gew.-%, bezogen auf die Gesamtmasse des Flammschutzmittels **A5,** der Komponente **PH** enthält.

In einer sechsten Ausführungsform betrifft die Erfindung ein Verfahren gemäß einer der Ausführungsformen 1 bis 5, dadurch gekennzeichnet, dass der Anteil an Komponente **PH** 0,1 Gew.-% bis 30,0 Gew.-%, bezogen auf die Gesamtmasse der Komponente **A1** = 100 Gew.-% und bevorzugt 0,04-0,4 mol Phosphonat pro kg Schaumstoff beträgt.

In einer siebten Ausführungsform betrifft die Erfindung ein Verfahren gemäß einer der Ausführungsformen 1 bis 6, dadurch gekennzeichnet, dass das Flammschutzmittel **A5** kein halogenhaltiges Flammschutzmittel enthält.

In einer achten Ausführungsform betrifft die Erfindung ein Verfahren gemäß einer der Ausführungsformen 1 bis 7, dadurch gekennzeichnet, dass das Reaktionsgemisch enthaltend

**A1** 50 Gew.-% bis 100 Gew.-% eines oder mehrerer Polyesterpolyole und 0 Gew.-% bis 20 Gew.-% eines oder mehrerer Polyetherpolyole, jeweils bezogen auf das Gesamtgewicht der Komponente **A1,**

**A2** Wasser und physikalische Treibmittel,

**A3** Katalysator,

**A4** gegebenenfalls Additiv,

**A5** Flammschutzmittel, enthaltend **PH**
mit

**B** polymerem Isocyanat

umgesetzt wird.
In einer neunten Ausführungsform betrifft die Erfindung ein Verfahren gemäß einer der Ausführungsformen 1 bis 7, dadurch gekennzeichnet, dass ein Reaktionsgemisch enthaltend

**A1** ein Polyesterpolyol mit einer Hydroxylzahl von 50 mg KOH/g bis 400 mg KOH/g,

**A2** Treibmittel, enthaltend eine Verbindung ausgewählt aus der Gruppe bestehend aus halogenfreien chemischen Treibmitteln, halogenfreien physikalischen Treibmitteln und (hydro)fluorierten Olefinen,

**A3** Katalysator, enthaltend Alkalicarboxylat und/oder Di- oder Trialkylaminomethylphenol,

**A4** Additiv, enthaltend einen Schaumstabilisator,

**A5** Flammschutzmittel, enthaltend ein erfindungsgemäßes Phosphonat **PH,**
mit

**B** monomerem und polymeren MDI

umgesetzt wird.
In einer zehnten Ausführungsform betrifft die Erfindung ein Verfahren nach einer der Ausführungsformen 1 bis 9, dadurch gekennzeichnet, dass die Herstellung bei einer Kennzahl von 110 bis 150 erfolgt.
In einer elften Ausführungsform betrifft die Erfindung ein Verfahren nach einer der Ausführungsformen 1 bis 9, dadurch gekennzeichnet, dass die Herstellung bei einer Kennzahl von 240 bis 390 erfolgt.
In einer zwölften Ausführungsform betrifft die Erfindung ein Verfahren nach einer der Ausführungsformen 1 bis 11, dadurch gekennzeichnet, dass **A5** eine weitere, von **PH** verschiedene, niedrigviskose (<0,25 Pa*s bei 25°C) Phosphorverbindung enthält, wobei das Gewichtsverhältnis von **PH** : **PL** bevorzugt 3:1 bis 5:1 beträgt.
Die Erfindung betrifft ebenfalls einen PUR/PIR-Hartschaumstoff, erhältlich nach dem Verfahren gemäß einer der Ausführungsformen 1 bis 12. In einer bevorzugten Ausführungsform weist dieser ein Raumgewicht von 30 -50 g/dm$^3$, in einer anderen ebenfalls bevorzugten Ausführungsform ein Raumgewicht von 200-700 g/dm$^3$ auf.
Die Erfindung betrifft auch die Verwendung von erfindungsgemäßen PUR/PIR-Hartschaumstoffen zur Herstellung eines Isolationsmaterials.

## Experimenteller Teil

### A) Messmethoden:

Hydroxyl(OH)-Zahl: Die OH-Gruppentitration erfolgte nach DIN 53240-1 (Juni 2013) mit einem Mettler Titrator T70 mit einem DG-111 Sensor (Gießen, Deutschland). Als Acetylierungsgemisch wurde Essigsäureanhydrid-Lösung mit 10% N-Methylpyrrolidon verwendet. Die Katalysatorlösung bestand aus einer 1%igen Lösung von 4-N-Dimethylaminopyridin in N-Methylpyrrolidon. Nach der Acetylierung der Probe in Lösung wurde die freigesetzte Essigsäure mit einer 0.5 N KOH-Methanol-Lösung rücktitriert.
Dichtemessung: Die Rohdichte der ausgehärteten Schäume wurde nach DIN EN ISO 845 (Oktober 2009) und die mittlere Porengröße der Schäume wurde mittels Lichtmikroskopie (Mittelwert von 20 Poren) ausgewertet (Axio Imager, ZEISS).
Als Maß für die Offenzelligkeit wurde die Wasseraufnahme der Schäume bestimmt. Dazu wurden Schaumwürfel von 4 cm Kantenlänge für 90 Minuten in siedendem Wasser vollständig untergetaucht. Die Massendifferenz wurde zwischen trockenem Würfel und dem Würfel nach 90 Minuten bestimmt und durch das Würfelvolumen und die Dichte von Wasser dividiert. Die Dichte der Schäume wurde ermittelt, indem die Masse der Cone-Prüfkörper durch deren Volumen (10 cm x 10 cm x 5 cm) dividiert wurde. Die Messung der Druckfestigkeit erfolgte nach ISO 604 (März 2002) an einem TIRAtest 2300 Instrument (TIRA GmbH, Schmalkalden, Deutschland). Die Vorkraft betrug 2 N und der Test wurde mit 500 mm/min bis zu einer Kompression von 60% durchgeführt und die Proben anschließend entlastet. Als Probenkörper dienten Würfel mit einer Kantenlänge von 5 cm. Es wurden Mittelwerte aus 2-4 Messungen verwendet.
Die brandtechnologische Prüfung der Schäume erfolgte durch den Kleinbrennertest (Vertical flame spread,

VFS) angelehnt an die Norm DIN 4102 -1 (Mai 1998) (Probenkörper 20 cm x 10 cm x 1 cm, Brenngas: Methan, Beflammung im 45°-Winkel an der unteren Kante für 15 s) und dem "Cone Calorimeter" nach ISO 5660-1 (März 2015). Die Abmaße der Prüfkörper betrugen 10 cm x 10 cm x 5 cm, sie wurden für 48 h bei 23 °C und 50 %iger Luftfeuchte gelagert und anschließend mit 50 $kW/m^2$ in einem Abstand von 2.5 cm bestrahlt. Um das Abbrennen der Kanten zu verhindern, wurden diese mit Aluminiumfolie umwickelt. Während der Messung wurden das Maximum der Wärmefreisetzung (peak of heat release rate, PHRR), das Maximum der geglätteten Wärmefreisetzungskurve (MARHE), die gesamte Wärmefreisetzung (total heat released, THR), die Gesamtrauchfreisetzung (total smoke release, TSR) sowie der gesamte Massenverlust (total mass loss, TML) bestimmt. Der angegebene Rückstand ergibt sich als (1-TML)/Einwaage. Das Verhältnis THR/TML ist einer der typischen Kennwerte zur Charakterisierung der Effizienz eines Flammschutzmittels bezüglich der Aktivität in der Gasphase. THR/TML sollte also mit abnehmender formaler Oxidationsstufe des Phosphors abnehmen.

**B) Untersuchte Flammschutzmittel**

Als Referenz wurde das für die Anwendung in PUR-Systemen bekannte Flammschutzmittel $C_{32}H_{24}O_8P_2$ (Pudovic-Addukt von DOPO an Terephthaloyolaldehyd, CN103965432, WO2015176623, CN109021500) gewählt **(DOPO-TA,** Beispiel 4*; Oxidationsstufe des Phosphors +I, jeder Phosphor ist an zwei Sauerstoffe gebunden):

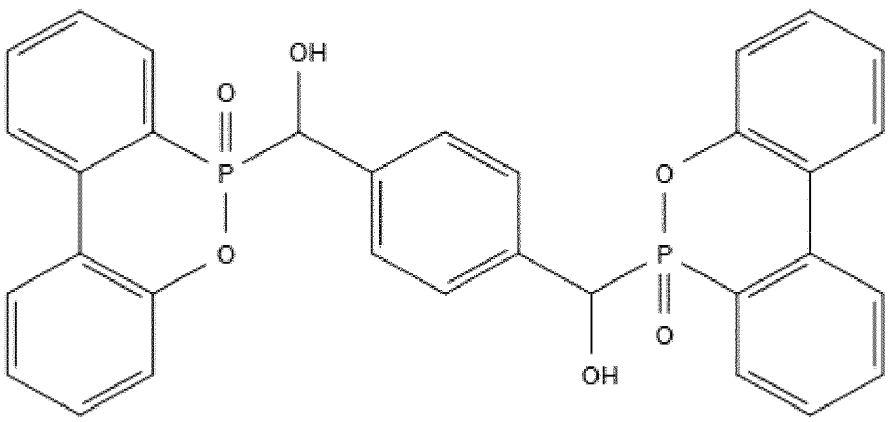

## Beispiel 4*: DOPO-TA

Die stöchiometrische Umsetzung von DOPO-TA mit Sauerstoff nach $C_{32}H_{24}O_6P_2 + 37{,}5\ O_2 \rightarrow 32\ CO_2 + 12\ H_2O + P_2O_5$ erfordert 2,12 g $O_2$/g Phosphonat
Durch die Umsetzung von Dibenzo[d,f][1,3,2]dioxaphosphepin-6-oxid (BPPO) mit verschiedenen (Di)Aldehyden (Terepthalaldehyd, TA und Furfural, FU) wurden erfindungsgemäße, neuartige Flammschutzmittel PH [Beispiel 1: BBPO-TA (gemäß allgemeiner Formel I) und Beispiel 2: BBPO-FU, gemäß allgemeiner Formel II) hergestellt. Das erfindungsgemäße Phosphonat **BBPO-TA** (Beispiel 1; Oxidationsstufe des Phosphors +III, jeder Phosphor ist an drei Sauerstoffe gebunden) besitzt eine Struktur der allgemeinen Formel I. Die stöchiometrische Umsetzung von BPPO-TA mit Sauerstoff $C_{32}H_{24}O_8P_2 + 36{,}5\ O_2 \rightarrow 32\ CO_2 + 12\ H_2O + P_2O_5$ erfordert 1,95 g $O_2$/g Phosphonat:

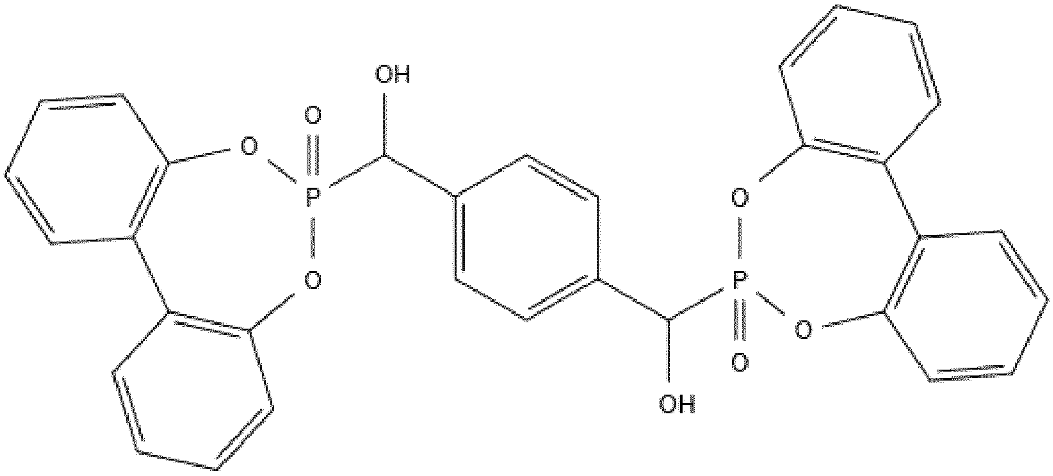

**Beispiel 1: BBPO-TA**

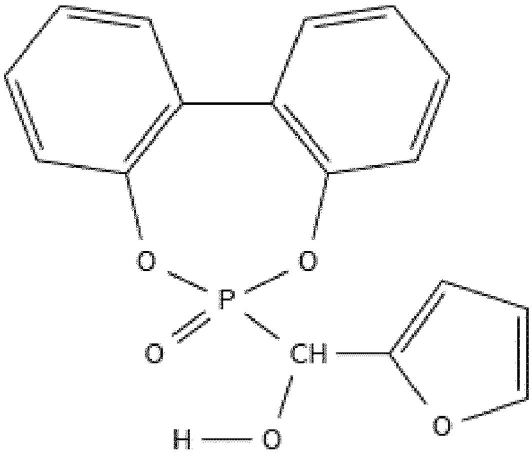

**Beispiel 2: BPPO-FU**

Durch die Umsetzung von Dibenzo[d,f][1,3,2]dioxaphosphepin-6-oxid (BPPO) mit Paraformaldehyd wurde das nicht erfindungsgemäßes Beispiel 3* hergestellt [BPPO-FA]. Als weiterer Vergleich wurden nicht erfindungsgemäße Flammschutzmittel durch die Umsetzung von 9,10-Dihydro-9-oxa-10-phosphaphenanthren-10-oxid mit Terephthalaldehyd [Beispiel 4*: DOPO-TA, Struktur siehe oben) und Dibutylphosphit mit Paraformaldehyd (Beispiel 5*: BP-FA) hergestellt.

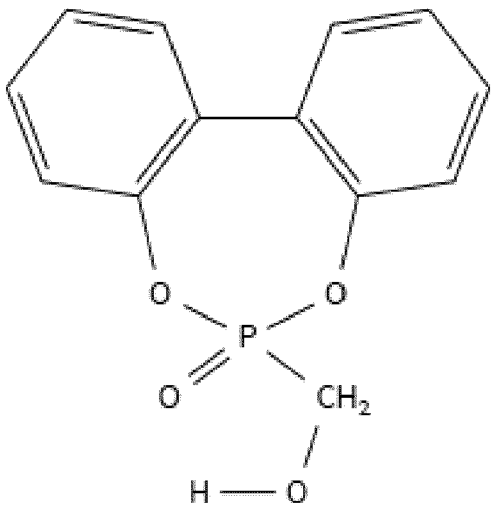

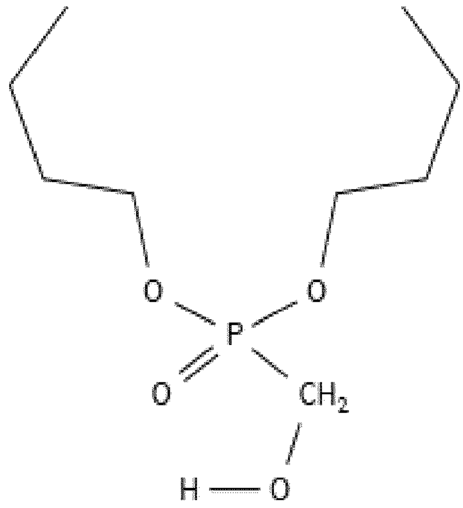

**Beispiel 3*: BPPO-FA**

**Beispiel 5*: BP-FA**

Als weiterer Vergleich wurden die zwei kommerziell erhältliche Flammschutzmittel, Exolit® OP560 (Beispiel 8*: ein oligomeres Phosphonat, drei Sauerstoffatome an Phosphor gebunden) und Triphenylphosphat (Beispiel 9*: TPP, vier Sauerstoffatome am Phosphor), herangezogen. Alle Flammschutzmittel wurden in PUR/PIR-Hartschäumen getestet, eine Übersicht der Beispiele ist in Tabelle 1 zu finden:

**Tabelle 1:** Übersicht der hergestellten und untersuchten Flammschutzmittel

| Beispiel | Flammschutzmittel | Abkürzung | OXZ (P) |
|---|---|---|---|
| Beispiel 1 | 6,6'-(1,4-Phenylenebis(hydroxylmethylene)) bis(dibenzo[d,f][1,3,2] dioxaphosphepine-6-oxid | BBPO-TA | +III |
| Beispiel 2 | 6-(Furan-2-yl(hydroxy)methyl) dibenzo[d,f] [1,3,2]dioxaphosphepine-6-oxid | BPPO-FU | +III |
| Beispiel 3* | 6-(Hydroxymethyl)-dibenzo[d,f][1,3,2]dioxaphosphepin-6-oxid | BPPO-F A | +III |
| Beispiel 4* | 6,6'-(1,4-Phenylenebis(hydroxymethylene)) bis(dibenzo[c,e][1,2] oxaphosphinine-6-oxid) | DOPO-TA | +I |
| Beispiel 5* | Dibutyl(hydroxymethyl)phosphonat | BP-FA | +III |
| Beispiel 6* | Exolit® OP560 - oligomeres Phosphonat der Firma Clariant | OP560 | +III |
| Beispiel 7* | Triphenylphosphat | TPP | +V |

**C) Herstellungsverfahren der Phosphonate Beispiele 1-5***

**a) Herstellung von Dibenzo[d,f] [1,3,2]dioxaphosphepin-6-oxid (BPPO)**

In einem Dreihalsrundkolben mit aufgesetztem Rückflusskühler, Tropftrichter und Glaskanüle (Stickstoffeinlass) wurden 257.5 g (1.38 mol) 2,2-Biphenol (Sigma-Aldrich) und 24.9 g (1.38 mol) $H_2O$ in 500 mL 1,4-Dioxan unter Stickstoffatmosphäre gelöst. Unter starkem Rühren wurde innerhalb von 3 h 189.9 g (1.38 mol) $PCl_3$ (Sigma-Aldrich) zugegeben. Nach erfolgreicher Zugabe wurde das Reaktionsgemisch für 1 h unter Rückfluss erhitzt. Es kam zu einer starken HCl-Entwicklung und die aus der Apparatur entweichenden Gase wurden zur Neutralisation durch konzentrierte Natronlauge geleitet. Nach erfolgter Umsetzung wurde das Reaktionsgemisch in einen Einhalsrundkolben überführt und das Lösungsmittel wurde am Rotationsverdampfer entfernt. Es wurde ein öliges, gelbliches Rohprodukt erhalten, welches

nach einigen Tagen kristallisiert und durch Umkristallisation aus Toluol gereinigt werden konnte. Über die Pudovik-Reaktion wurde das BPPO in den folgenden Beispielen mit verschiedenen (Di)Aldehyden umgesetzt:

**b) Umsetzung von BPPO mit Dialdehyden**

**Beispiel 1: Herstellung von BPPO-TA (Verbindung mit Struktur der allgemeinen Formel (I))**

Es wurden 250.0 g (1.08 mol) BPPO (Herstellung siehe oben) und 72.0 g (0.54 mol) Terephthalaldehyd (Sigma-Aldrich) in einem 1-L-Rundkolben in 500 mL trockenem Toluol gelöst und 6 h bei 120 °C gerührt. Nach Reaktionsende wurde der Niederschlag abgesaugt und mit Diethylether gewaschen. Die OH-Zahl betrug 185 mg KOH/g Probe, der berechnete Phosphorgehalt 10,4 Gew.-%.

Der berechnete Verbrauch an Sauerstoff zur vollständigen Umsetzung zu $CO_2$, $H_2O$ und $P_2O_5$ beträgt 1,95 g $O_2$/g FS-1 gemäß: $C_{32}H_{24}O_8P_2 + 36{,}5\ O_2 \rightarrow 32\ CO_2 + 12\ H_2O + P_2O_5$

| Komponente | Typ | Ringgröße | $H[R^1+R^2]/C[R^1+R^2]$ | $H[R^5+R^6]/C[R^5+R^6]$ | $H[R^4]$ | $H[R^4]/C[R^4]$ | Gew.% P |
|---|---|---|---|---|---|---|---|
| BPPO-TA | (II) | 7 | 0,67 | 0,67 | 4 | 0,67 | 10,4 |
| $H[R^x]$ bedeutet: Summe der Wasserstoffatome im Rest $R^x$<br>C[Rx] bedeutet entsprechend: Summe der Kohlenstoffatome im Rest $R^x$ | | | | | | | |

**Beispiel 2: Herstellung von BPPO-FU (Verbindung mit Struktur der Formel (II)**

Es wurden 30.0 g (0.13 mol) BPPO (Herstellung siehe oben) und 0.13 mol Furfural (Sigma-Aldrich) in einem 100-mL-Rundkolben in 50 mL trockenem Dichlormethan gelöst und mit Eis gekühlt. Anschließend wurden 0.3 mL Triethylamin (0.5 mol% bezogen auf BPPO) zugegeben und bei 0 °C für 2 h gerührt. Nach Reaktionsende wurde der Niederschlag abgesaugt und mit kaltem Dichlormethan gewaschen. Die OH-Zahlen der Flammschutzmittel entsprechend Beispiel 2 betrug 196 mg KOH/g Probe, der berechnete Phosphorgehalt 9,4 Gew.-%.

Der berechnete Verbrauch an Sauerstoff zur vollständigen Umsetzung zu $CO_2$, $H_2O$ und $P_2O_5$ beträgt 1,85 g $O_2$/g PH-2.

| Komponente | Typ | Ringgröße | $H[R^1+R^2]/C[R^1+R^2]$ | $H[R^3]$ | $H[R^3]/C[R^3]$ | Gew.% P |
|---|---|---|---|---|---|---|
| BPPO-FU | (I) | 7 | 0,67 | 3 | 0,75 | 9,4 |

**Beispiel 3* (Vergleich): Herstellung von BPPO-FA**

Es wurden 30.0 g (0.13 mol) BPPO und 3.88 g (0.13 mol) Paraformaldehyd (Sigma-Aldrich) in einem 100-mL-Rundkolben in 50 mL trockenem Tetrahydrofuran gelöst und für 3 h unter Rückfluss gerührt. Nach Reaktionsende wurde das Rohprodukt mit Diethylether gefällt, abgesaugt und mit Diethylether gewaschen und getrocknet. Die OH-Zahl betrug 168 mg KOH/g Probe, der berechnete Phosphorgehalt 11,8 Gew.-%. Der berechnete Verbrauch an Sauerstoff zur vollständigen Umsetzung zu $CO_2$, $H_2O$ und $P_2O_5$ beträgt 1,83 g $O_2$/g FS-3.

| | Typ | Ringgröße | $H[R^1+R^2]/C[R^1+R^2]$ | $H[R^3]$ | $H[R^3]/C[R^3]$ | Gew. % P |
|---|---|---|---|---|---|---|
| BPPO-F A | (I) | 7 | 0,67 | 1 | 1 | 11,8 |

**D) Herstellung der weiteren Phosphonate**

**Beispiel 4* (Vergleich): Herstellung von DOPO-TA**

Es wurden 232.8 g (1.08 mol) DOPO und 72.0 g (0.54 mol) Terephthalaldehyd in einem 1-L-Rundkolben in 500 mL trockenem Toluol gelöst und 6 h bei 120 °C gerührt. Nach Reaktionsende wurde der Niederschlag abgesaugt und mit Diethylether gewaschen. Die OH-Zahl betrug 197 mg KOH/g Probe, der berechnete Phosphorgehalt 10,9 Gew.-%. Der berechnete Verbrauch an Sauerstoff zur vollständigen Umsetzung zu $CO_2$, $H_2O$ und $P_2O_5$ beträgt 2,12 g $O_2$/g FS-4.

| Typ | Ringgröße | $H[R^1+R^2]/C[R^1+R^2]$ | $H[R^5+R^6]/C[R^5+R^6]$ | $H(R^4)$ | $H[R^4]/C[R^4]$ | Gew.% P |
|---|---|---|---|---|---|---|
| (II) | 6 | 0,67 | 0,67 | 4 | 0,67 | 10,9 |

**Beispiel 5* (Vergleich): Herstellung von BP-FA**

Es wurden 25.2 g (0.13 mol) Dibutylphosphit und 3.88 g (0.13 mol) Paraformaldehyd in einem 100-mL-Rundkolben in 50 mL trockenem Tetrahydrofuran gelöst und für 3 h unter Rückfluss gerührt. Nach Reaktionsende wurde das Rohprodukt mit Diethylether gefällt, abgesaugt und mit Diethylether gewaschen und getrocknet. Die OH-Zahl betrug 249 mg KOH/g Probe, der berechnete Phosphorgehalt 13,8 Gew.-%. Der berechnete Verbrauch an Sauerstoff zur vollständigen Umsetzung zu $CO_2$, $H_2O$ und $P_2O_5$ beträgt 1,93 g $O_2$/g FS-5.

| Typ | Ringgröße | $H[R^1+R^2]/C[R^1+R^2]$ | $H(R^3)$ | $H[R^3]/C[R^3]$ | Gew. % P |
|---|---|---|---|---|---|
| (I) | Kein Ring | 2,25 | 1 | 1 | 13,8 |

**Herstellung der PUR/PIR-Hartschäume und Eigenschaften der Schaumreaktion:**

Die hergestellten Flammschutzmittel (Beispiele 1 -5*) und die kommerziellen Flammschutzmittel (Beispiel 6*, Exolit® OP560 (ca. 11,5 Gew.-%) und Triphenylphosphat (Beispiel 7*) wurden in PUR/PIR-Hartschäumen untersucht, wobei die eingesetzten Gewichtsteile (Gew.-T.) der jeweiligen Flammschutzmittel so gewählt wurden, dass die Schaumstoffe 7 g Phosphor/kg Schaumstoff enthielten. Die Formulierungen sind in Tabelle 2 und die Ergebnisse der Untersuchung in Tabelle 3 zu finden.

Für die Herstellung der PUR/PIR-Schäume wurden die Komponenten **A1-1** (Polyesterpolyol auf Basis von Phthalsäure, Adipinsäure, Ethylenglycol und Diethylenglycol mit einem mittleren Molgewicht $M_n$ von 460 g/mol, Covestro) und **A1-2** (Polyethylenglykol PEG 400, Sigma-Aldrich), Stabilisator **A4-1** (Tegostab® B8421, Evonik Industries), Emulgator **A4-2** (Emulsogen® TS 100, Clariant), Katalysator **A3-1** (25 Gew.-% Kaliumacetat in Diethylenglykol, Sigma-Aldrich), Treibmittel **A2-1** (n-Pentan, Sigma-Aldrich) und die Flammschutzmittel (Tabelle 1, Beispiele 1- 7*) mit einem mechanischen Rührer bei 2000 U/min homogenisiert. Anschließend wurde der benötigte Anteil an polymerem Isocyanat **B-1** (Desmodur® 44V70L, NCO 31 Gew.-%, Covestro) zugegeben, für einige Sekunden gerührt und in eine offene, mit Löschpapier ausgekleidete Form zum Schäumen gegossen. Während des Schäumvorgangs wurde die Startzeit, Abbindezeit und Steigzeit des Schaumes notiert. Die Startzeit entspricht dem Zeitpunkt, an dem die Mischung cremig wurde und anfing zu expandieren. Zur Abbindezeit war es möglich, feste Fasern aus dem expandierenden Schaum zu ziehen. Der Zeitpunkt, an dem der Schaum nicht weiter expandierte, wurde als Steigzeit bezeichnet. Nach der vollständigen Expansion des Schaums wurde dieser aus der Form entnommen und für 24 h bei Raumtemperatur gelagert. Nach dieser Zeit wurden die Ränder des Schaumes entfernt und Probekörper ausgeschnitten.

**Tabelle 2:** PUR/PIR - Formulierungen enthaltend die Flammschutzmittel Beispiele 1 - 7*

| **Beispiel** | | **8** | **9** | **10*** | **11*** | **12*** | **13*** | **14*** |
|---|---|---|---|---|---|---|---|---|
| Flammschutzmittel Beispiel | | **1** | **2** | **3*** | **4*** | **5*** | **6*** | **7*** |
| Name | | BPPO-TA | BPPO-FU | BPPO-F A | DOPO-TA | BP-FA | OP560 | TPP |
| Ringgröße | | 7 | 7 | 7 | 6 | - | - | - |
| **A-Komponenten** | | Gew.-T. | Gew.-T. | Gew.-T. | Gew.-T. | Gew.-T. | Gew.-T. | Gew.-T. |
| A1-1 | OHZ** 240 | 53.0 | 53.0 | 53.0 | 53.0 | 53.0 | 53.0 | 53.0 |
| A1-2 | OHZ 280 | 16.0 | 16.0 | 16.0 | 16.0 | 16.0 | 16.0 | 16.0 |
| A2-1 | OHZ 0 | 15.0 | 15.0 | 15.0 | 15.0 | 15.0 | 15.0 | 15.0 |
| A4-1 | OHZ 116 | 4.0 | 4.0 | 4.0 | 4.0 | 4.0 | 4.0 | 4.0 |
| A3-1 | OHZ 790 | 2.5 | 2.5 | 2.5 | 2.5 | 2.5 | 2.5 | 2.5 |
| A4-2 | OHZ 100 | 2.0 | 2.0 | 2.0 | 2.0 | 2.0 | 2.0 | 2.0 |

(fortgesetzt)

| Flammschutzmittel | | Gew.-T. | Gew.-T. | Gew.-T. | Gew.-T. | Gew.-T. | Gew.-T. | Gew.-T. |
|---|---|---|---|---|---|---|---|---|
| Beispiel 1 | OHZ 185 | 17.5 | | | | | | |
| Beispiel 2 | OHZ 196 | | 19.5 | | | | | |
| Beispiel 3* | OHZ 168 | | | 15.2 | | | | |
| Beispiel 4* | OHZ 197 | | | | 16.5 | | | |
| Beispiel 5* | OHZ 249 | | | | | 16.5 | | |
| Beispiel 6* | OHZ 400 | | | | | | 15.85 | |
| Beispiel 7* | OHZ 0 | | | | | | | 19.6 |
| **B-Komponente** | | Gew.-T. | Gew.-T. | Gew.-T. | Gew.-T. | Gew.-T. | Gew.-T. | Gew.-T. |
| B-1 | | 151.8 | 151.8 | 151.8 | 151.8 | 151.8 | 151.8 | 151.8 |
| **Index (100 NCO/OH)** | | 274 | 273 | 274 | 273 | 274 | 244 | 316 |
| *Vergleichsbeispiel, **OHZ in mg (KOH) / g | | | | | | | | |

**Tabelle 3:** Eigenschaften der PUR/PIR Reaktionsmischungen und Hartschäume enthaltend die Formulierungen 8 - 14*

| **Beispiel** | | **8** | **9** | **10*** | **11*** | **12*** | **13*** | **14*** |
|---|---|---|---|---|---|---|---|---|
| Phosphor im Schaumstoff | g/kg | 7 | 7 | 7 | 7 | 7 | 7 | 7 |
| Gehalt nachwachsender Rohstoff im FS | Gew.-%** | - | 29 | - | - | - | - | - |
| **Verarbeitung und Schaumeigenschaften** | | | | | | | | |
| Startzeit | s | 28 | 10 | 9 | 4 | 7 | 32 | 25 |
| Abbindezeit | s | 35 | 17 | 42 | 14 | 20 | 70 | 55 |
| Steigzeit | s | 45 | 31 | 50 | 25 | 30 | 90 | 75 |
| Rohdichte | $kg/m^3$ | 35 | 41 | 35 | 36 | 34 | 37 | 37 |
| Wasseraufnahme | Vol.-% | 50 | 57 | 67 | 60 | 25 | 7 | 5 |
| Maximalkraft bei 60% Stauchung | MPa | 0,25 | 0,29 | 0,25 | 0,25 | 0,24 | 0,32 | 0,39 |
| Mittlere Porengröße | μm | 170 | 170 | 220 | 210 | 170 | - | 170 |
| **Brandtechnologische Prüfungen** | | | | | | | | |
| Vertikale Flammhöhe | cm | 11 | 12 | 18 | 11 | 16 | 16 | 17 |
| Cone Calorimeter | | | | | | | | |
| Peak(HRR) | $kW/m^2$ | 128 | 155 | 227 | 148 | 203 | 208 | 177 |
| MARHE | $kW/m^2$ | 90 | 112 | 163 | 100 | 139 | 194 | 184 |
| THR | $MJ/m^2$ | 22 | 22 | 24 | 23 | 21 | 23 | 32 |
| TSR | $m^2/m^2$ | 386 | 532 | 888 | 451 | 331 | 868 | 787 |
| Rückstand | Gew% | 31 | 30 | 24 | 32 | 26 | 30 | 28 |

(fortgesetzt)

| Cone Calorimeter | | | | | | | | |
|---|---|---|---|---|---|---|---|---|
| THR/TML | GJ/m²kg | 1,8 | 1,5 | 1,8 | 1,9 | 1,7 | 1,7 | 2,3 |
| *Vergleichsbeispiel | | | | | | | | |

Es zeigt sich, dass Schaum Beispiel 8 enthaltend das erfindungsgemäße Flammschutzmittel Beispiel 1 allen anderen Flammschutzmitteln bezüglich maximaler Wärmefreisetzung und dem regulatorisch wichtigen MARHE-Wert überlegen ist. Auch die effektive Verbrennungswärme THR/Masseverlust liegt überraschenderweise unter dem direkten Vergleich mit dem analogen DOPO-basierten Molekül (Beispiel 4*). Ein möglicherweise auf Basis der unterschiedlichen chemischen Umgebung des Phosphors zu erwartender Unterschied im Ausmaß der Verkohlung wurde nicht festgestellt: die Rückstände sind vergleichbar.

Der Schaum 9 enthaltend Flammschutzmittel Beispiel 2 ist bezüglich maximaler Wärmefreisetzung, und gesamter Wärmefreisetzung mit dem Vergleich - Schäume Beispiel 13* und 14* - auf gleichem Niveau, das Flammschutzmittel Beispiel 2 weist aber den Vorteil auf, zu 29 Gew.-% aus nachwachsenden Rohstoffen zu bestehen. Es zeigt zusätzlich überraschenderweise eine sehr hohe Effizienz, die sich im niedrigsten aller THR/TML-Wert ausdrückt, der selbst unter dem des Schaums Beispiel 12* liegt, in dem das Flammschutzmittel Beispiel 5* enthalten ist, das aufgrund seiner geringen Molmasse eine erheblich höhere Flüchtigkeit und damit stärkere inhibierende Präsenz in der Flamme erwarten lässt und deshalb wie erwartet einen vergleichsweise geringen Beitrag zur Verkohlung leistet.

Die Wirkung von den erfindungsgemäßen hydroxyfunktionellen Phosphonaten BPPO-TA und BPPO-FU ist umso überraschender, als das analoge Umsetzungsprodukt mit Formaldehyd BPPO-FA, Beispiel 3*, in allen Belangen dem vergleichbaren Dibutylhydroxymethylphosphonat BP-FA, Beispiel 5*, unterlegen ist.

In einer weiteren Versuchsreihe wurden PUR/PIR Formulierungen zu Hartschäumen umgesetzt, welche neben dem Phosphonat noch als weitere Flammschutzmittelkomponente Triethylphosphat enthielten (TEP). Die weiteren Komponenten A1 - 4 sowie das Isocyanat
sowie die Verarbeitung waren identisch mit denen der Beispiele 8 - 14*.

**Tabelle 4:** PUR/PIR Formulierungen auf Basis von Flammschutzmittelmischungen enthaltend TEP

| Beispiel | | **15** | **16** | **17*** | **18*** |
|---|---|---|---|---|---|
| **A-Komponenten** | | | | | |
| A1-1 | Gew.-T. | 53.0 | 53.0 | 53.0 | 53.0 |
| A1-2 | Gew.-T. | 16.0 | 16.0 | 16.0 | 16.0 |
| A2-1 | Gew.-T. | 15.0 | 15.0 | 15.0 | 15.0 |
| A4-1 | Gew.-T. | 4.0 | 4.0 | 4.0 | 4.0 |
| A3-1 | Gew.-T. | 2.5 | 2.5 | 2.5 | 2.5 |
| A4-2 | Gew.-T. | 2.0 | 2.0 | 2.0 | 2.0 |
| **Flammschutzmittel** | | | | | |
| Beispiel 1 | Gew.-T. | 17,5 | | | |
| Beispiel 2 | Gew.-T. | | 19,5 | | |
| Beispiel 3* | Gew.-T. | | | 15,2 | |
| Beispiel 7* | Gew.-T. | | | | 15,85 |
| **TEP** | Gew.-T. | 5 | 5 | 5 | 5 |
| **B-Komponente** | | | | | |
| B-1 | Gew.-T. | 151.8 | 151.8 | 151.8 | 151.8 |
| | | | | | |
| **Ausprüfung der Schäume am Cone Calorimeter** | | | | | |
| MARHE | $kW/m^2$ | 106 | 112 | 163 | 111 |
| TSR | $m^2/m^2$ | 414 | 532 | 754 | 324 |

(fortgesetzt)

| Ausprüfung der Schäume am Cone Calorimeter | | | | | |
|---|---|---|---|---|---|
| Massenverlust | Gew.-% | 69 | 70 | 73 | 64 |
| Kleinbrennertest | | | | | |
| Vertikale Flammhöhe | cm | <10 | k. A. | 18 | 14 |

Die Daten zeigen erneut die Vorteile der Verwendung von BPPO-TA bei Flammhöhe und MARHE des Schaumsystems (Beispiel 15). Auch der Schaum enthaltend BPPO-FU (Beispiel 16) liegt beim MARHE-Wert auf dem Niveau des Schaums mit einer Triethyl-/Triphenylphosphat-Mischung (Beispiel 17*, Referenz). Der Schaum enthaltend die BPPO-FA - /TEP - Mischung (Beispiel 18*) fällt dagegen in allen Kategorien stark gegen die erfindungsgemäßen Beispiele ab.

## Patentansprüche

**1.** Hydroxyfunktionelle Phosphonate **PH** der Formel

(I) $(R^1O)(R^2O)P(O)CH(OH)-R^3$

und/oder

(II) $(R^1O)(R^2O)P(O)CH(OH)-R^4-CH(OH)-P(O)(OR^5)(OR^6)$,

wobei es sich bei

- $R^1$, $R^2$, $R^5$, $R^6$ um können hergestellt werden aus der Umsetzung der entsprechenden Phosphonsäure mit Aldehyden, gegebenenfalls substituierte Kohlenwasserstoffreste handelt, die gleich oder verschieden sein können, und die so ausgewählt sind, dass das Verhältnis der Summe der Wasserstoffe in $R^1$ und $R^2$ zu der Summe der Kohlenstoffe in $R^1$ und $R^2$ ($H[R^1+R^2]$ /$C[R^1+R^2]$ -Verhältnis) $\leq 2$, bevorzugt $\leq 1{,}2$ besonders bevorzugt $\leq 1$ beträgt, und dass das Verhältnis der Summe der Wasserstoffe in $R^5$ und $R^6$ zu der Summe der Kohlenstoffe in $R^5$ und $R^6$ ($H[R^5+R^6]$ /$C[R^5+R^6]$ -Verhältnis) $\leq 2$, bevorzugt $\leq 1{,}2$ besonders bevorzugt $\leq 1$ beträgt,
- $R^1O$, $R^2O$ sowie P bzw. $R^5O$, $R^6O$ und P jeweils **≥7-gliedrige Ringe** bilden, und
- $R^3$ ausgewählt ist aus der Gruppe bestehend aus (optional substituierten) Alkenyl, Aryl-, Polyoxyalkenyl- und Aralkylresten, wobei die Summe der Wasserstoffe in $R^3$ ($H[R^3]$) $\leq 10$, bevorzugt $\leq$ beträgt,
- $R^4$ ausgewählt ist aus der Gruppe bestehend aus (optional substituierten) Alkyl-, Alkenyl-, Polyoxyalkenyl-, Aryl- und Aralkylresten, wobei die Summe der Wasserstoffe in $R^4$ ($H[R^4]$) $\leq 20$, bevorzugt $\leq 5$, beträgt.

**2.** Phosphonate **PH** gemäß Anspruch 1, bei denen $R^1O$, $R^2O$ sowie P einen 7-gliedrigen Ring bilden und/oder $R^5O$, $R^6O$ und P einen 7-gliedrigen Ring bilden.

**3.** Phosphonate **PH** gemäß Anspruch 1 oder 2, **dadurch gekennzeichnet, dass** $R^1$, $R^2$, $R^5$ und $R^6$ jeweils substituiert mit Substituenten ausgewählt aus Wasserstoff, Fluor, Chlor, Brom, $OR^7$ (mit $R^7$ = H, Cl-C2-Alkyl, Alkylen oder Polyoxyalkylen), $NR^8R^9$ (mit $R^8$ = H, Cl-C2-Alkyl, Alkylen oder Polyoxyalkylen); $R^9$ = H, NH, OH, C1-C2-Alkyl oder Polyoxyalkylen) und $SO_nR^{10}$ [mit $R^{10}$ = H, Alkali- und Erdalkalimetallkationen (n = 0-3)], Substituenten an $R^1$, $R^2$, $R^5$ und $R^6$ können gleich oder verschieden sein.

**4.** Phosphonate **PH** gemäß Anspruch 1, 2 und/oder 3, **dadurch gekennzeichnet, dass** es sich bei $R^3$ um einen Arylrest handelt, insbesondere um einen Arylrest ausgewählt aus der Gruppe enthaltend $C_6H_5$ und dessen substituierte Derivate, $C_nH_{n-1}X_{5-n}$ (mit X = O, $NR^7$, S, n = 2-5) und dessen substituierte Derivate.

**5.** Phosphonate **PH** gemäß einem der Ansprüche 1 bis 4, **dadurch gekennzeichnet, dass** es sich bei $R^4$ ium Substituenten ausgewählt aus der Gruppe enthaltend

a. $C_6H_4$, $C_{10}H_6$, und deren substituierte Derivate, wobei ein Teil der Kohlenstoffatome im Ring auch durch Stickstoff ersetzt sein können, und

b. $C_nH_{n-2}X_{5-n}$ mit X = O, $NR^7$, S und n = 2-5 sowie deren substituierte Derivate.

**6.** Verfahren zur Herstellung eines als Flammschutzmittel geeigneten Phosphonates **PH** gemäß einem der Ansprüche 1 - 5 entsprechend der vorangehenden Ansprüche durch Umsetzung eines Aldehydes oder eines Dialdehydes mit einer phosphorphaltigen Verbindung der Formel $(R^1O)(R^2O)POH$.

**7.** Verfahren gemäß Anspruch 6, wobei der Aldehyd ausgewählt ist aus substitutierten oder unsubstituierten Terephthalaldehyden, Naphthaldehyden, Furfuralen, Thiofurfuralen und Pyrrolcarboxaldehyd.

**8.** Verwendung eines hydroxyfunktionellen Phosphonats **PH** gemäß einem der Ansprüche 1-5 als Flammschutzmittel in Kunststoffen.

**9.** Verfahren zur Herstellung von PUR/PIR-Polymeren enthaltend Flammschutzmittel umfassend hydroxyfunktionelle Phosphonate **PH** gemäß einem der Ansprüche 1-5.

**10.** Verfahren gemäß Anspruch 9, das **dadurch gekennzeichnet ist, dass** es sich bei dem PUR/PIR-Polymeren um einen Hartschaumstoffe handelt, der durch die Umsetzung eines Reaktionsgemisches enthaltend

**A1** eine Isocyanat-reaktive Komponente
**A2** Treibmittel
**A3** Katalysator
**A4** gegebenenfalls Additiv
**A5** Flammschutzmittel
mit
**B** einer Isocyanatkomponente,

bei einer Kennzahl von 80 bis 600 hergestellt wird,
**dadurch gekennzeichnet ist, dass** das Flammschutzmittel **A5** ein oder mehrere Phosphonate **PH** der Formeln (I) und/oder (II) enthält.

**11.** Verfahren gemäß Anspruch 10, **dadurch gekennzeichnet, dass** die Kennzahl > 240 beträgt.

**12.** Verfahren gemäß Anspruch 10 oder 11, **dadurch gekennzeichnet, dass** als Flammschutzmittel eine Kombination der Komponente **PH** mit einer niedrigviskosen Phosphorverbindung **PL** ("niedrigviskos" bedeutet in diesem Fall eine Viskosität von < 0,25 Pa*s bei 25°C aufweisend), eingesetzt wird.

**13.** Isocyanat-basierter Hartschaumstoff, erhältlich nach dem Verfahren gemäß Anspruch 11 oder 12.

**14.** Verwendung eines PUR/PIR-Hartschaumstoffs gemäß einem der Ansprüche 12 oder 13 zur Herstellung eines Isolationsmaterials.

Europäisches Patentamt
European Patent Office
Office européen des brevets

# EUROPÄISCHER RECHERCHENBERICHT

Nummer der Anmeldung
EP 20 21 2716

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X<br><br><br>A | CN 110 229 190 B (UNIV SCIENCE & TECHNOLOGY CHINA)<br>28. August 2020 (2020-08-28)<br>* Intermediat in der Herstellung von Beispiel 4; Auswahl von einer Liste der Markush Formel (II) mit R1 = (PhO)2P(=O)- *<br>* Flammschutzmittel der Formel (I): Anspruch 1 *<br>* Verwendung der phosphorhaltigen Endprodukte als Flammschutzmittel in Epoxyharzen: Beispiel 7 *<br>----- | 1,3,5-8<br><br><br>2 | INV.<br>C07F9/6571<br>C07F9/38<br>C09K21/12 |
| X<br><br><br>A | CN 109 280 219 A (NINGBO INST MATERIALS TECH & ENG CAS)<br>29. Januar 2019 (2019-01-29)<br>* Verbindung 6 in paragraph [84] *<br>* Markush Formel von Anspruch 1 beschreibend phosphorhaltigen Verbindungen als Flammschutzmittel in Komposit-Polymeren (siehe Anspruch 8) einschliesslich PUR Polymeren (siehe Anspruch 9). *<br>* Verfahren zur Herstellung dieser Verbindung: Reaktion von Furfural mit Diphenylphosphite: siehe Beispiel 8 *<br>----- | 1,3,4,<br>6-14<br><br>2 | RECHERCHIERTE SACHGEBIETE (IPC)<br>C07F<br>C09K |
| X | KR 2010 0077509 A (CHEIL IND INC [KR])<br>8. Juli 2010 (2010-07-08)<br>* Verbindung (PhO)2P(=O)-CH(OH)-Ph auf Seite 10 *<br>* Verwendung als Zwischenprodukt in der Herstellung von Flammschutzmitteln in thermoplastischen Kunststoffen: siehe Ansprüche 1-5 *<br>-----<br>-/-- | 1,3,4,6,<br>8 | |

Der vorliegende Recherchenbericht wurde für alle Patentansprüche erstellt

3

| Recherchenort | Abschlußdatum der Recherche | Prüfer |
|---|---|---|
| Den Haag | 26. April 2021 | Lange, Tim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 20 21 2716

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | CN 111 763 351 A (UNIV BEIJING TECHNOLOGY & BUSINESS) 13. Oktober 2020 (2020-10-13)<br>* Verbindung "DOPO-dihydroxylinker-DPhPO" in Beispiel 3 *<br>* Herstellung durch Reaktion von DPhPO mit Dialdehyd: siehe Paragraph [13] *<br>----- | 1,3 | |
| X | CHRISTIANSEN ANDREA ET AL: "Heteroatom-Substituted Secondary Phosphine Oxides (HASPOs) as Decomposition Products and Preligands in Rhodium-Catalysed Hydroformylation", CHEMISTRY - A EUROPEAN JOURNAL, Bd. 17, Nr. 7, 11. Februar 2011 (2011-02-11), Seiten 2120-2129, XP055797703, ISSN: 0947-6539, DOI: 10.1002/chem.201002823<br>* Schema 11: Reaktion von HASPO 1 mit n-Nonanal und n-Hexanal und die daraus resultierenden entsprechenden Aldehyd-Additionsprodukte 12a und 12b *<br>* Struktur von HASPO: siehe Schema 6 *<br>----- | 1-3,6 | RECHERCHIERTE SACHGEBIETE (IPC) |

Der vorliegende Recherchenbericht wurde für alle Patentansprüche erstellt

3

| Recherchenort | Abschlußdatum der Recherche | Prüfer |
|---|---|---|
| Den Haag | 26. April 2021 | Lange, Tim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Seite 2 von 2

Europäisches Patentamt
European Patent Office
Office européen des brevets

Nummer der Anmeldung
EP 20 21 2716

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt
European Patent Office
Office européen des brevets

# MANGELNDE EINHEITLICHKEIT DER ERFINDUNG ERGÄNZUNGSBLATT B

Nummer der Anmeldung
EP 20 21 2716

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-14

Verbindungen der Markush Formeln (I) und (II), Verfahren zu deren Herstellung, Verwendung in Flammschutzmitteln, Verfahren zur Herstellung von Isocyanat-basierenden PUR/PIR Polymeren und Isocyanat-Hartschaumstoffe, die solche Verbindungen enthalten.

1.1. Ansprüche: 1-14(teilweise)

Verbindungen der Markush Formel (I), Verfahren zu deren Herstellung, Verwendung in Flammschutzmitteln, Verfahren zur Herstellung von Isocyanat-basierenden PUR/PIR Polymeren und Isocyanat-Hartschaumstoffe, die solche Verbindungen enthalten.

1.2. Ansprüche: 1-14(teilweise)

Verbindungen der Markush Formel (II), Verfahren zu deren Herstellung, Verwendung in Flammschutzmitteln, Verfahren zur Herstellung von Isocyanat-basierenden PUR/PIR Polymeren und Isocyanat-Hartschaumstoffe, die solch

---

Bitte zu beachten dass für alle unter Punkt 1 aufgeführten Erfindungen, obwohl diese nicht unbedingt durch ein gemeinsames erfinderisches Konzept verbunden sind, ohne Mehraufwand der eine zusätzliche Recherchengebühr gerechtfertigt hätte, eine vollständige Recherche durchgeführt werden konnte.

## ANHANG ZUM EUROPÄISCHEN RECHERCHENBERICHT ÜBER DIE EUROPÄISCHE PATENTANMELDUNG NR. EP 20 21 2716

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2021

| Im Recherchenbericht angeführtes Patentdokument | Datum der Veröffentlichung | Mitglied(er) der Patentfamilie | Datum der Veröffentlichung |
|---|---|---|---|
| CN 110229190 B | 28-08-2020 | KEINE | |
| CN 109280219 A | 29-01-2019 | KEINE | |
| KR 20100077509 A | 08-07-2010 | KEINE | |
| CN 111763351 A | 13-10-2020 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3385801 A
- WO 2010080425 A
- WO 2020201187 A
- WO 2016026871 A
- EP 285136 A
- EP 2910585 A1
- EP 1359177 A1
- WO 2010043624 A
- EP 1923417 A
- US 2764565 A
- CN 103965432
- WO 2015176623 A
- CN 109021500


### In der Beschreibung aufgeführte Nicht-Patentliteratur


- *Chem. Eur. J.,* 2011, vol. 17, 2120-2129
- Kunststoff-Handbuch. Carl Hanser Verlag, 1993, vol. VII, 267 ff
- Polyurethan Taschenbuch. Carl Hanser Verlag, 2001, 83-102